Europäisches Patentamt

European Patent Office

Office européen des brevets

(11) Veröffentlichungsnummer: **0 455 021 A2**

# EUROPÄISCHE PATENTANMELDUNG

(21) Anmeldenummer: **91105841.0**

(22) Anmeldetag: **12.04.91**

(51) Int. Cl.⁵: **F16L 37/14**

(30) Priorität: **02.05.90 DE 9004958 U**

(43) Veröffentlichungstag der Anmeldung:
**06.11.91 Patentblatt 91/45**

(84) Benannte Vertragsstaaten:
**AT BE CH DE DK ES FR GB GR IT LI LU NL SE**

(71) Anmelder: **Westaflexwerk GmbH & Co. KG**
**5, Thaddäusstrasse**
**W-4830 Gütersloh 1(DE)**

(72) Erfinder: **Simon, Erwin**
**Eichenweg 9**
**W-4840 Rheda-Wiedenbrück(DE)**

(74) Vertreter: **Meldau, Gustav, Dipl.-Ing. et al**
**Patentanwälte Dipl.-Ing. Gustav Meldau**
**Dipl.-Phys. Dr. H.-J. Strauss Postfach 2452**
**Vennstrasse 9**
**W-4830 Gütersloh 1(DE)**

(54) **Rohrkupplung.**

(57) Zur Verbesserung von Rohrkupplungen für mit ihren Stößen übereinandergeschobene Rohre aus Blech o. dgl., mit zwei in den beiden Rohrstößen ausgebildeten, gegeneinanderliegenden und gegenständigen Sicken, wobei die außenliegende Sicke ein Fenster aufweist, durch das ein den durch die Sicken gebildeten Hohlraum ausfüllendes Kupplungselement in Form einer Spiralfeder eingeschoben ist, wird vorgeschlagen, die Rohrkupplung derart auszubilden, daß anstelle der Spiralfeder ein Streifen (15) aus wellenförmig gebogenem Flachmaterial eingesetzt ist.

Fig.1

EP 0 455 021 A2

Die Neuerung bezieht sich auf eine Rohrkupplung für mit ihren Stößen übereinandergeschobene Rohre aus Blech oder dgl., mit zwei in den beiden Rohrstößen ausgebildeten, gegeneinanderliegenden und gegenständigen Sicken, wobei die außenliegende Sicke ein Fenster aufweist, durch das ein den durch die Sicken gebildeten hohlraumausfüllendes Kupplungselement in Form einer Spiralfeder eingeschoben ist.

Es ist bekannt, bei Kunststoffrohren, wie sie etwa für Abwasserleitungen verwendet werden, eine Rohrkupplung etwa derart auszubilden, daß in den übereinanderzuschiebenden Muffen von zwei miteinander zu verbindenden Rohren, gegeneinanderliegende und gegenständige Sicken ausgebildet sind, die bei ordnungsgemäß zusammengestecktem Rohrstoß einen im Querschnitt etwa kreisförmigen Hohlraum umschließen. In diesen Hohlraum ist vor dem Zusammenstecken ein O-Ring aus Gummi oder anderem elastischem Material eingesetzt, d.h., dieser O-Ring wird in die Sicke des inneren Rohrstoßes eingelegt, sodann der äußere Rohrstoß darüber geschoben, wobei der Ring aufgrund seiner Materialelastizität zusammengedrückt wird, bis der Hohlraum der Sikke des äußeren Rohrstoßes darüber liegt, so daß er sich in diesem Hohlraum ausdehnen kann und damit ein dichtendes Kupplungselement zwischen den beiden Rohrstößen bildet.

Derartige Rohrkupplungen sind aufgrund der Elastizität des O-Ringes und auch aufgrund begrenzter Temperaturempfindlichkeit auch nur in Verbindung mit Kunststoffrohren verwendbar. Sie dienen weniger als Rohrkupplungen, denn als Dichtungen der Verbindung.

Es ist auch schon bekannt geworden, wie vorbeschriebene ausgebildete Rohrstöße bei Metallrohren derart auszubilden, daß die äußere Sicke mit einem Durchbruch oder Fenster versehen ist. Nach dem Zusammenstecken der Rohrstöße wird durch dieses Fenster eine Spiralfeder in den Hohlraum zwischen den beiden Sicken eingeschoben. Diese Spiralfeder dient dann aufgrund ihrer Formsteifigkeit im Hinblick auf den Querschnitt als Kupplungselement zwischen den beiden ineinandergesteckten Rohrstößen.

Abgesehen davon, daß solche Spiralfedern verhältnismäßig aufwendig und auch teuer sind, ist ihre Einführung nicht sehr einfach. Es hat sich in der Praxis auch herausgestellt, daß sie zumindest unter bestimmten Einsatzbedingungen eine nicht ganz ausreichende Kupplung zwischen den beiden Rohrstößen aufrechterhalten. Auch das Einführen einer Spiralfeder durch ein Fenster in der äußeren Sicke in den kreisförmigen Hohlraumtunnel ist in der Praxis oft mit erheblichen Schwierigkeiten verbunden, wobei besonders zu beachten ist, daß aufgrund der Eigenschaften einer Spiralfeder nicht die Möglichkeit besteht, diese beispielsweise mittels eines zuvor in den Sickenhohlraum vorbereitend eingelegten Fadens oder Drahtes durch diesen Tunnel hindurchzuziehen, weil sie sich dabei ausschließlich nur ausdehnen würde, jedoch aufgrund der hohen Reibung an den Außenflächen kaum weiterzuziehen ist, sondern eher gestreckt wird und dabei überdehnt.

Die Neuerung hat sich die Aufgabe gestellt, Rohrkupplungen der letztgenannten Art zu verbessern und derart auszubilden, daß das Kupplungselement leicht und einfach einführbar ist und eine Kupplung erzeugt, die auch höheren Belastungen und Anforderungen gewachsen ist.

Zur Lösung dieser Aufgabe ist eine Rohrkupplung der eingangs genannten Art dadurch gekennzeichnet, daß anstelle der Spiralfeder ein Streifen aus wellenförmig gebogenem Flachmaterial eingesetzt ist.

Das Kupplungselement nach der Neuerung in Form eines Streifens aus dünnem Material, der gewellt, also etwa sinusförmig oder trapezförmig gebogen ist, ergibt gegenüber dem bekannten Stand der Technik erhebliche Vorteile, die darin bestehen, daß ein solcher Streifen, auch wenn er aus Edelstahl besteht, wesentlich einfacher und leichter herzustellen ist, wobei der Preis erheblich geringer ist. Dabei spielen die Größenordnungen keine wesentliche Rolle hinsichtlich der Herstellungskosten. Weiterhin ist ein solcher gewellter Streifen nach der Neuerung wesentlich leichter und einfacher durch eines oder mehrere Fenster in der äußeren Sicke einzuführen und in den zwischen den Sicken bestehenden Hohlraum einzuschieben oder auch einzuziehen mittels eines vorher eingelegten Bandes oder einer Schnur, weil aufgrund der wellenförmigen Ausbildung des Streifens dieser eine erhebliche Quersteifigkeit hat, in Längsrichtung jedoch eine hohe Biegefähigkeit, andererseits jedoch nur in sehr geringer Weise in Längsrichtung zu dehnen ist. Hinzu kommt dabei, daß aufgrund des im wesentlichen rechteckigen Querschnitts des Streifens die Anordnung derart getroffen werden kann, daß der einzuführende Streifen als Kupplungselement lediglich an seinen vier Eckkanten des Querschnittes in dem durch die gegeneinanderliegenden Sicken gebildeten Hohlkanal anliegt. Dadurch wird einerseits die Reibung beim Einführen des Streifens erheblich verringert, andererseits jedoch die formschlüssige Anlage insbesondere auch die Wirksamkeit der Kupplung zwischen den beiden Rohrstößen gegenüber der nach dem bekannten Stand der Technik verwendeten Spiralfeder wesentlich verbessert. Eine formschlüssige Anlage der bekannten Spiralfeder in einem im Querschnitt rundem Kanal ist praktisch ausgeschlossen, da ein Einschieben bzw. ein Ziehen der Feder dadurch derart aufgrund der allseitigen Reibung an der Innenwandung des Sickenkanals zu derartigen Hemmungen führt, daß eine Weiterbewegung nicht mehr möglich ist. Bei Verwendung einer Spiralfeder als Kupplungselement ist daher ein unmittelbarer Formschluß ohne "Wackeln" nicht herzustellen.

Ein besonders wesentlicher Vorteil der Neuerung besteht darin, daß aufgrund der Verwendung des in Querrichtung aufgrund seiner Wellung sehr formsteifen Streifens nicht nur eine weitgehend formschlüssige sondern auch erheblich belastbare Kupplung der beiden Rohrstöße herzustellen ist. Rohre, die in der Weise miteinander gekoppelt sind, haben, wie die Praxis zeigt, eine derart feste Verbindung miteinander, daß sie beispielsweise als Verwendung einer Schornsteinauskleidung von oben her auch bei vielstöckigen Häusern in den Schornstein eingeführt werden können, wobei die einzelnen Rohrstöße nach und nach angekuppelt werden, und die bereits angekuppelten Rohrstöße im Schornstein herabhängen ohne das die Gefahr des Abreißens oder anderweitiger Lösung einer vorhandenen Kupplung besteht.

Nach einer vorteilhaften Ausführungsform ist der wellenförmig gebogene Streifen aus einem nicht oxidierenden oder chemisch resistenten Material, vorzugsweise aus Edelstahl hergestellt.

Zur Aufnahme des wellenförmig gebogenen Streifens als Kupplungselement ist der Sickenhohlraum mit einem rechteckigen Querschnitt ausgebildet. Der Sickenhohlraum kann jedoch auch im Abstand liegende äußere paralle Wandungen aufweisen und die Querwandungen verlaufen schräg dazu und bilden einen Winkel, so daß der Gesamtquerschnitt des Hohlraumes etwa sechseckig ist.

Die an erster Stelle bezeichnete etwa rechteckige Ausbildung des Hohlraumes bewirkt eine gute Aufnahme des Streifens aus wellenförmig gebogenem Flachmaterial, wobei dieser Streifen an seinen, aneinander gegenüberliegenden Kanten, also achsparallel zu den miteinander zu verbindenden Rohren an den (geteilten) radial zur Rohrachse verlaufenden Wänden des Hohlraumes anliegt und damit deren Verschiebung gegeneinander verhindert, so daß damit eine sichere und beständige Kupplung zwischen den beiden miteinander zu verbindenden Rohrenden hergestellt ist. Die an zweiter Stelle genannte Ausführung des durch die Sikken gebildeten Hohlraumes, in Form eines Sechseckes oder auch in anderem Querschnitt, wie beispielsweise polygonal oder flachoval, ergibt zwar einerseits eine "nicht-flächige" Anlage der einander gegenüberliegenden Kanten des Wellenstreifens, so daß bei Belastung in Richtung der Rohre höhere Lastspitzen entstehen können. Da jedoch Metall auf Metall liegt, ist das unwesentlich. Vorteilhafter ist jedoch, daß beim Einbringen des Wellenstreifens in den durch die Sicken gebildeten Hohlraum, der Wellenstreifen lediglich an den äußersten Kantenpunkten Berührung mit der Innenwandung hat, so daß nur eine sehr geringe Reibung vorhanden ist und das Einbringen des Wellenstreifens dadurch erheblich erleichtert wird. Selbst wenn bei anschließender Belastung sich die Sickenquerschnitte derart verbiegen sollten, daß an den Stellen, an denen der Wellenstreifen von innen gegen die schrägen oder gewölbten Wandungen des Sickenhohlraumes anliegt, in Richtung der Belastung verbiegen, wird dadurch lediglich die Auflagefläche vergrößert, so daß Lastspitzen abgebaut werden. Der Wellenstreifen als solcher kann sich aufgrund seiner besonderen Formgebung bei Belastung nicht verformen.

Zur Vereinfachung unter Beschleunigung beim Verbinden der Rohre kann es zweckmäßig sein, daß der Sickenhohlraum mit mehreren, vorzugsweise im gleichen Abstand voneinander angeordneten Einführungsfenstern für das Kupplungselement versehen ist. In diesem Falle wäre es auch zweckmäßig das Kupplungselement in entsprechende kürzere Stücke zu unterteilen.

Es kann auch nach Einführen des Kupplungselementes der Sickenhohlraum zusätzlich mit einer Dichtungsmasse versehen werden, die durch das bzw. die Einführungsfenster von außen her eingespritzt oder eingepreßt wird.

Die Neuerung wird nachstehend anhand eines Ausführungsbeispiels mit Bezug auf die Zeichnungen näher erläutert. In den Zeichnungen zeigen

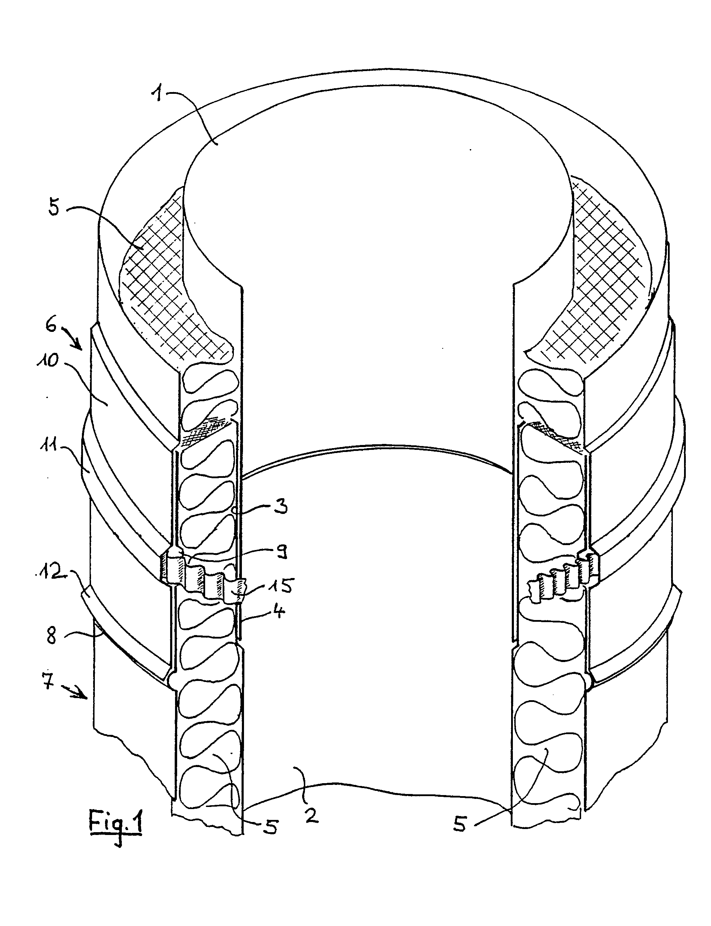

Figur 1:    eine perspektivische Ansicht einer Rohrverbindung, teilweise aufgeschnitten;

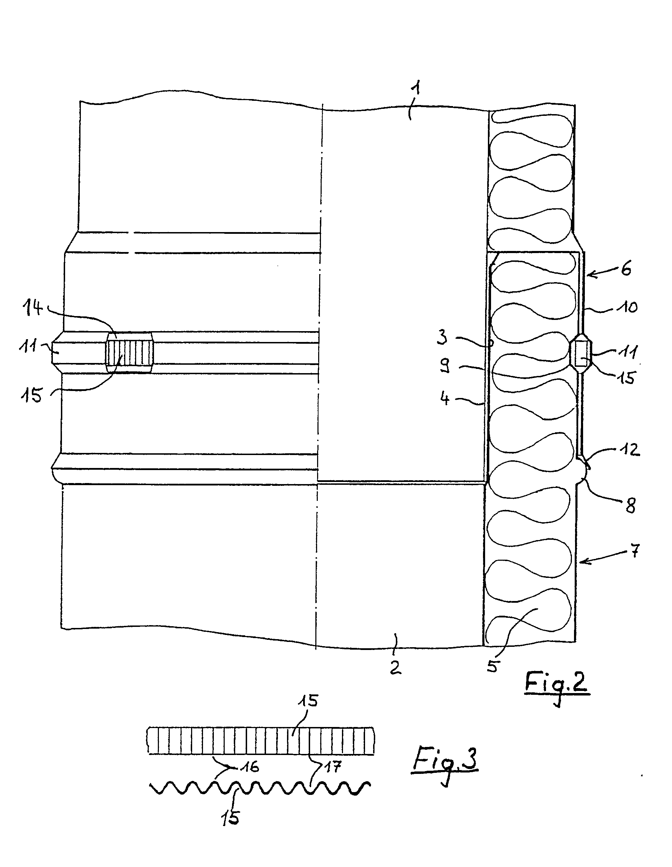

Figur 2:    eine Seitenansicht dieser Rohrverbindung;

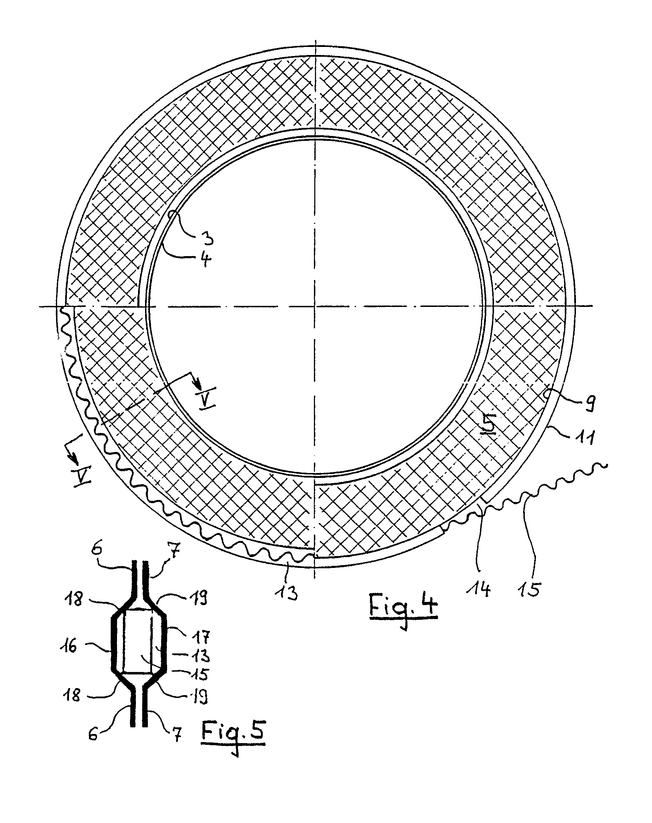

Figur 3:    eine Seiten- und Draufsicht des Kupplungselementes;

Figur 4:    einen Querschnitt durch die beschriebene Rohrverbindung;

Figur 5:    einen Längsschnitt entlang der Linie V-V der Figur 4;

Bei der hier dargestellten Rohrkupplung handelt es sich um ein isoliertes Rohr, das aus einem inneren Rohr 1 und einem daran anschließenden Rohr 2 besteht, wobei diese beiden Rohre 1 und 2 mit einer einfachen Muffenverbindung versehen sind, das Rohr 2 ist an seinem Ende mit einer Aufweitung 3 versehen, in die das gegenüberliegende Ende 4 des Rohres hineingesteckt ist.

Die Rohre 1 und 2 sind auf ihrer Außenseite mit einer Isolierung 5 versehen, die aus Mineralfasern oder Schaumstoff bestehen kann und hier in üblicherweise durch Mäanderlinien angedeutet ist. Die Isolierung 5 ist auf ihrer Außenseite von Rohren 6 und 7 abgedeckt, wobei das (in der Zeichnung untere) Rohr 7 mit einer Anschlagsicke 8 versehen ist und im Abstand darüber mit einer nach innen eingedrückten Sicke 9.

Das darüber zu schiebende Rohr 6 bildet zunächst eine im Durchmesser etwas erweiterte Muffe 10, in die das ohne Querschnittserweiterung durchlaufende Rohr 7 einzustecken ist. Etwa in der Mitte dieser Muffe 10 ist eine nach außen vorstehende Sicke 11 angeformt und am Ende ist die Kante des Rohres 6 mit einer etwas schräg nach außen gerichteten flanschartigen Abformung versehen. Es ist erkennbar, daß diese flanschartige Abformung nach dem Zusammenstecken der beiden Rohre 6 und 7 gegen die Anschlagsicke 8 in dem Rohr 7 anliegt.

In diesem ineinander gesteckten Zustand sind die beiden in den Rohren ausgebildeten Sicken 9 und 11 derart in Flucht gebracht, daß sie einen um das Rohr umlaufenden Hohlraum bilden. Dieser Hohlraum 13 zwischen den Sicken 9 und 11 ist an einer Stelle des Umfanges des Rohres mit einem Fenster 14 versehen, d.h., es ist an dieser Stelle die äußere Sicke 11 geöffnet. In dieses Fenster 14 wird nach dem Zusammenschieben der Rohre und Ausrichten der Sicken 9 und 11, um einen gleichmäßig durchgehenden Hohlraum 13 zu bilden, ein Kupplungselement 15 in Form eines Streifens aus wellenförmig gebogenem Flachmaterial eingeschoben. Die Wellen 16 und "Täler" 17 des Streifens 15 sind dabei derart ausgebildet, daß der räumliche Querschnitt des Streifens 15 in den Hohlraum 13 gleitend hinein paßt, die Ober- und Unterkanten des Streifens mit ihren Wellen jedoch an die obere und untere Begrenzung des Hohlraumes 13 durch die Sicken 9 und 11 anliegen. Es ist damit eine feste Kupplung zwischen den beiden Rohre 6 und 7 hergestellt, die auch höhere Belastungen aufnehmen kann, beispielsweise wenn bei einem Schornstein von oben, vom Dach her zur Restaurierung, ein Isolierrohr eingesetzt und abgesenkt werden muß. Es ist dann nicht erforderlich, mit erheblichem Aufwand und einem besonderen Kran, ein durchgehendes Rohr einzuführen und abzusenken, sondern es können einzelne Rohrstücke nach und nach aneinander gekuppelt und in den Schornstein abgesenkt werden. Die Kupplung nach der Neuerung ist dabei in der Lage, bei entsprechender Ausbildung, erhebliche Zuggewichte aufzunehmen, so daß eine größere Anzahl von Rohrstücken, aneinander gekuppelt, freihängend in den Schornstein abgelassen werden können.

Eine besonders zweckmäßige Ausführung nach der Neuerung ist in Figur 5 dargestellt. Danach hat der Hohlraum 13 zwischen den Sicken 9 des inneren Rohrteiles 7 und 11 des äußeren Rohrteiles 6 einen sechseckigen Querschnitt. Dabei ist der Hohlraum 13 von zwei im Abstand liegenden, äußeren parallelen Wandungen 16 und 17 begrenzt, wobei die Wandung 16 zu dem Rohr 6 gehört und die Wandung 17 zu dem Rohr 7 gehört. Am oberen und unteren Ende dieser parallel zueinanderliegenden Wandungsteile 16 und 17 verlaufen Schrägflächen 18 und 19 zum Rohrumfang 6 bzw. 7, dadurch wird der etwa sechseckige Querschnitt des von den Sicken 9 und 11 umgrenzten Hohlraumes 13 vorgegeben. Der in diesen sechseckigen Hohlraum 13 eingeführte Wellenstreifen 15 stößt lediglich mit den äußersten Bereichen seiner Wellen punkt-linienförmig von innen gegen die schrägverlaufenden Wandungsteile 18 und 19, so daß beim Einführen des Wellenstreifens 15 geringst mögliche Anlage und damit Reibung vorhanden ist, so daß das Einführen des Wellenstreifens ohne besondere Schwierigkeiten und sehr zügig und schnell durchzuführen ist.

Es ist erkennbar, daß diese zweckmäßige Ausbildungsform, bei der der Wellenstreifen 15 lediglich punkt-linienförmig gegen die Innenwandungen des Hohlraumes 13 anliegt, auch bei verschiedenen anderen Querschnittsformen erreicht werden kann, beispielsweise, wenn der Hohlraum flachoval oder sogar auch kreisförmig, oder in anderer polygonaler Form begrenzt ist.

## Patentansprüche

1. Rohrkupplung für mit ihren Stößen übereinandergeschobene Rohre aus Blech oder dgl., mit zwei in den beiden Rohrstößen ausgebildeten, gegeneinanderliegenden und gegen-ständigen Sicken, wobei die außenliegende Sicke ein Fenster aufweist, durch das ein den durch die Sicken gebildeten Hohlraum ausfüllendes Kupplungselement in Form einer Spiralfeder eingeschoben ist, **dadurch gekennzeichnet**, daß anstelle der Spiralfeder ein Streifen (15) aus wellenförmig gebogenem Flachmaterial eingesetzt ist.

2. Rohrkupplung nach Anspruch 1, **dadurch gekennzeichnet**, daß der wellenförmig gebogene Streifen (15) aus einem nicht oxidierenden oder chemisch resistenten Material, vorzugsweise aus Edelstahl besteht.

3. Rohrkupplung nach Anspruch 1, **dadurch gekennzeichnet**, daß der Sickenhohlraum (13) einen rechteckigen Querschnitt hat.

4. Rohrkupplung nach Anspruch 1, **dadurch gekennzeichnet**, daß der Sickenhohlraum (13) zwei im Abstand liegende äußere parallele Wandungen (16, 17) aufweist und die Querwandungen (18, 19) schräg dazu verlaufen und einen Winkel bilden, so daß der Gesamtquerschnitt des Hohlraumes (13) etwa sechseckig ist.

5. Rohrkupplung nach Anspruch 1, **dadurch gekennzeichnet**, daß der Querschnitt des Sik-

kenhohlraumes (13) polygonal ausgebildet ist.

6. Rohrkupplung nach Anspruch 1, **dadurch gekennzeichnet**, daß der Querschnitt des Sikkenhohlraumes (13) flachoval ausgebildet ist.

7. Rohrkupplung nach Anspruch 1, **dadurch gekennzeichnet**, daß der Sickenhohlraum (13) mit mehreren, vorzugsweise im gleichen Abstand voneinander angeordneten Einführungsfenstern (14) für das Kupplungselement (15) versehen ist.

8. Rohrkupplung nach Anspruch 1, **dadurch gekennzeichnet**, daß das Kupplungselement (15) in Form eines Streifens aus dünnem Material sinusförmig gewellt ist.

9. Rohrkupplung nach Anspruch 1, **dadurch gekennzeichnet**, daß das Kupplungselement (15) in Form eines Streifens aus dünnem Material trapezförmig gewellt ist.

10. Rohrkupplung nach Anspruch 1, **dadurch gekennzeichnet**, daß die Form des Querschnitts des Kupplungselement-Streifens (15) und des Querschnitts des Sickenhohlraumes (13) derart aufeinander abgestimmt sind, daß lediglich eine punktlinienförmige Anlage des Streifens an seinen vier Querschnittsecken an den Innenwandungen des Hohlraumes vorhanden ist.

11. Rohrkupplung nach Anspruch 1, **dadurch gekennzeichnet**, daß in den Sickenhohlraum (13), zusätzlich zu dem Kupplungselement (15), eine Dichtungsmasse eingebracht ist.

Fig.1

EP 0 455 021 A2

Fig.2

Fig.3

Fig. 4

Fig. 5